Europäisches Patentamt

European Patent Office

Office européen des brevets

(11) Veröffentlichungsnummer: **0 356 745 B1**

## EUROPÄISCHE PATENTSCHRIFT

(45) Veröffentlichungstag der Patentschrift: **30.12.92**

(21) Anmeldenummer: **89114298.6**

(22) Anmeldetag: **02.08.89**

Teilanmeldung 91117701.2 eingereicht am 02/08/89.

(51) Int. Cl.⁵: **F28F 13/00**, F24J 2/28, B22F 7/00

(54) **Vorrichtung zur Wärmeübertragung.**

(30) Priorität: **20.08.88 DE 3828348**

(43) Veröffentlichungstag der Anmeldung:
**07.03.90 Patentblatt 90/10**

(45) Bekanntmachung des Hinweises auf die Patenterteilung:
**30.12.92 Patentblatt 92/53**

(84) Benannte Vertragsstaaten:
**AT BE CH DE ES FR GB IT LI NL SE**

(56) Entgegenhaltungen:
EP-A- 0 034 330      DE-A- 1 501 588
DE-A- 1 533 013      DE-A- 2 641 325
DE-A- 3 033 431      US-A- 3 873 805
US-A- 3 999 699

PATENT ABSTRACTS OF JAPAN, Band 1, Nr. 130 (M-44)[4439], 27. Oktober 1977;& JP-A-52 70 471 (SUMITOMO DENKI KOGYO K.K.) 06-11-1977

PATENT ABSTRACTS OF JAPAN, Band 6, Nr. 39 (M-116)[917], 10. März 1982;& JP-A-56 155 394 (MITSUBISHI DENKI K.K.) 01-12-1981

(73) Patentinhaber: **Schwäbische Hüttenwerke Gesellschaft mit beschränkter Haftung Wilhelmstrasse 67 Postfach 3280 W-7080 Aalen-Wasseralfingen(DE)**

(72) Erfinder: **Härle, Hans A., Dipl.-Ing. Röttingerstrasse 38 W-7085 Bopfingen(DE)**

(74) Vertreter: **Lorenz, Werner, Dipl.-Ing. Fasanenstrasse 7 W-7920 Heidenheim(DE)**

## Beschreibung

Die Erfindung betrifft eine Vorrichtung zur Wärmeübertragung bzw. zum Wärmeabtransport von einem Bauteil auf ein Fluid, insbesondere Luft, wobei das Bauteil wenigstens teilweise mit Spänen, Metalldrähten oder grobem Metallpulver aus wärmeleitfähigem Material versehen ist, die auf das Bauteil aufgesintert oder mit diesem versintert sind.

Eine derartige Vorrichtung ist aus der EP-A- 0 034 330 bekannt.

Eine Wärmeübertragung bzw. ein Wärmeabtransport aufgrund von Temperaturunterschieden wird in der Technik auf vielfältige Weise eingesetzt. Die Übertragung der Wärme kann dabei auf drei verschiedene Arten erfolgen: Durch Wärmeleitung, wobei die Wärme durch ein festes Medium oder stagnierendes Fluid fließt, durch Konvektion, wobei die Wärme durch Bewegung des Mediums, im allgemeinen eines Fluids, transportiert wird und durch Strahlung, wobei die Wärme in Form elektromagnetischer Wellen übertragen wird. Häufig sind auch mehrere dieser elementaren Arten der Wärmeübertragung miteinander kombiniert.

So sind z.B. Wärmetauscher bekannt, die aus zwei oder mehr Rohren bestehen, die von zwei Medien unterschiedlicher Temperaturen durchflößen werden, wobei der Wärmeaustausch nach dem Gleichstrom- oder Gegenstromprinzip erfolgt.

Bei Solarkraftanlagen ist es bereits bekannt, die von einem Spiegelsystem gebündelte Sonnenwärme in ein Drahtgeflecht zu leiten, das aus einem Zylinder mit feinmaschigen Drähten besteht. Durch den Zylinder läßt man Luft hindurchströmen, wobei Temperaturen von über 800 Grad C erreicht werden können. Die in der heißen Luft steckende Energie kann anschließend auf verschiedene Weise genutzt werden, wie z.B. in einem Absorber mit Kühlrohren.

Zwar kann mit dem zylinderförmigen Drahtgeflecht ein relativ guter Wirkungsgrad erreicht werden, aber nachteilig ist, daß das Drahtgeflecht nur eine geringe Stabilität besitzt und nicht ohne Schwierigkeiten in beliebige Formen bringbar ist. Bekannt sind auch Kühlrippen, Kühlstege oder dgl., die auf der Außenseite eines Gehäuses angeordnet sind und die durch ihre Oberflächenvergrößerung für eine bessere Wärmeabluft sorgen.

Nachteilig dabei ist jedoch, daß das Bauteil damit deutlich schwerer und größer wird.

Aus der EP-A 0 034 330 ist ein Verfahren zur pulvermetallurgischen Herstellung von Bauteilen mit verwickelten Hohlräumen oder mit stark strukturierten Außenflächen mit Hilfe von Metallkernen bekannt. Dabei werden in eine Kapsel aus Stahlblech Stäbe in mehreren Lagen eingesetzt. Nach dem Einsetzen der Stäbe wird die Kapsel vollständig mit Metallpulver gefüllt, durch Rütteln verdichtet, und anschließend erfolgt die Sinterung. Abschließend wird die Kapsel entfernt, worauf die Kerne ebenfalls aus dem Bauteil herausgelöst werden. Auf diese Weise läßt sich z.B. ein Kreuzstrom-Wärmetauscher mit verwickelten Hohlräumen schaffen. Dies bedeutet jedoch auch, daß das Fluid nur auf bestimmten Wegen, nämlich in den durch die Entfernung der Stäbe geschaffenen Hohlräumen, fließen kann.

Ähnliches gilt für die Vorrichtung nach der US-A 3 873 805. Auch aus dieser Druckschrift ist es nur grundsätzlich bekannt, ein Bauteil aus Sinterwerkstoff als Vorrichtung zur Wärmeübertragung bzw. zum Wärmetransport von einem Bauteil auf ein Fluid zu verwenden. Für das Fluid liegen dabei ebenfalls exakt konstruktiv vorgegebene Wege vor.

Der vorliegenden Erfindung liegt die Aufgabe zugrunde, eine Vorrichtung der eingangs erwähnten Art zu schaffen, die einen hohen Wirkungsgrad besitzt und gleichzeitig auch eine hohe Stabilität aufweist, wobei sie weitgehend auch frei von Beschränkungen in ihrer Form sein soll und nicht zu einer allzugroßen Gewichtserhöhung oder einem größeren Platzbedarf führt.

Erfindungsgemäß wird diese Aufgabe dadurch gelöst, daß das Bauteil aus mehreren Platten aus einem Geflecht- oder Gewirk von Metalldrähten gebildet ist, wobei in das Geflecht oder Gewirk die Späne, die Metalldrahtstücke oder das grobe Metallpulver eingesintert sind und wobei die Dicke bzw. der Durchmesser der gesinterten Teilchen zwischen 0,1 bis 2 mm liegt.

Das Bauteil kann dabei je nach Einsatzfall vollständig oder nahezu vollständig aus Metallspänen, Metalldrähten oder grobem Metallpulver formgepreßt und anschließend gesintert sein oder die Metallspäne, Metalldrähte oder das grobe Metallpulver sind auf wenigstens einen Teil der Oberfläche des Bauteiles aufgesintert.

Insbesondere bei Verwendung der erfindungsgemäßen Vorrichtung als Wärmetauscher in Solarkraftanlagen wird man das Bauteil vollständig aus den angegebenen gesinterten Teilen herstellen und dann von Luft als Wärmeträger durchströmen lassen.

Im Vergleich zu dem vorbekannten Drahtgeflecht liegt eine wesentlich höhere Stabilität vor und bei einer entsprechenden Ausgestaltung der Sinterformen läßt sich das erfindungsgemäße Bauteil auch in entsprechend beliebigen Formen herstellen.

Durch die ungeordnete bzw. willkürliche Durchströmung des Mediums durch die Poren wird aufgrund einer intensiven Berührung und Verwirbelung ein sehr guter Wirkungsgrad bezüglich der Wärmeübertragung erreicht. Im Unterschied zu bekannten Wärmetauschern liegen somit keine festgelegten Wege für das Medium vor, vielmehr wird die natürliche Porosität des Bauteiles für einen ungeordneten Durchgang des Mediums verwendet.

In einer vorteilhaften Ausgestaltung der Erfindung sind die Platten durch eine Widerstandsverschweißung teilweise miteinander verbunden.

Ein derartiges Bauteil läßt sich sehr einfach und kostengünstig herstellen. Gleichzeitig wird dadurch im Gegensatz zu den bekannten Geflechten eine kompakte Einheit geschaffen, wobei jedoch trotzdem eine hohe Durchflußleistung gewährleistet ist. Dadurch, daß sich ja ein derartiges Geflecht oder Gewirk nur an einzelnen Stellen berührt, die dann durch eine Widerstandsverschweißung miteinander verbunden werden, bleibt nach wie vor eine Vielzahl von Poren bzw. Öffnungen für einen Durchtritt des Fluid, insbesondere von Luft, zur Verfügung. Auf das plattenförmige Bauteil werden anschließend die Späne, Metalldrähte oder das grobe Metallpulver aufgesintert.

Im Bedarfsfalle ist es auch möglich, in der oder den Platten unterschiedliche starke Drähte anzuordnen. Dabei können sowohl innerhalb einer Platte Drähte unterschiedlicher Stärke bzw. Dicke angeordnet sein oder man verwendet mehrere übereinander liegende Platten, wobei einzelne Platten Drähte mit anderen Dicken oder Durchmessern wie die Drähte der anderen Platten besitzen. Auf diese Weise läßt sich die Durchflußgeschwindigkeit für das Fluid aufgrund unterschiedlicher Poren- bzw. Öffnungsgrößen innerhalb der Vorrichtung im Bedarfsfalle steuern. So kann z.B. eine derartige Wärmeübertragungseinrichtung auch zum Abscheiden von Verunreinigungen dienen.

Sinterteile sind in der Technik auf den verschiedensten Gebieten bekannt. Im allgemeinen wird dabei Metallpulver kalt oder warm in hydraulischen oder in Exzenterpressen formgepreßt und anschließend gesintert. Unter Sintern versteht man Erhitzen in reduzierender Atmosphäre auf Temperaturen, die ungefähr in Höhe von 2/3 bis 4/5 des Schmelzpunktes des verwendeten Metallpulvers liegen sollen. Dabei tritt dann ein Zusammenbakken der Metallflächen ein und eine Verfestigung der Pulvermischung.

Es hat sich nun herausgestellt, daß man bei Herstellung eines Sinterteiles aus kleinen Metalldrahtstücken, Metallspänen oder grobem Metallpulver eine so hohe Porosität erhält, daß man das Teil zum Wärmeaustausch mit einem durch das Teil durchströmenden Fluid, insbesondere Luft, aber auch jedem anderen gasförmige Medium, verwenden kann.

Im Vergleich zu dem vorbekannten Drahtgeflecht ist dabei auch durch den besseren Verbund der Metalldrähte, Metallspäne oder des groben Metallpulvers untereinander eine bessere Wärmeleitfähigkeit und damit bessere Wärmeabfuhr erreichbar. Bei dem Drahtgeflecht kann die Wärmeübertragung nur durch Oberflächenkontakt erfolgen. Darüberhinaus ist das erfindungsgemäße Bauteil auch haltbarer und höher belastbar. Dies gilt auch wenn als Ausgangsprodukt bzw. als Bauteil Platten aus einem Geflecht oder Gewirk von Metalldrähten verwendet werden, da durch die Widerstandsverschweißung die Stabilität der Platten entsprechend erhöht wird.

Aus diesem Grunde ist die erfindungsgemäße Vorrichtung besonders zum Einsatz für Solarkraftanlagen geeignet.

Nachfolgend sind zwei Ausführungsbeispiele der Erfindung anhand der Zeichnung prinzipmäßig beschrieben.

Es zeigt:

Fig. 1: eine Vorrichtung zum Wärmeaustausch in Solarkraftanlagen;

Fig. 2: eine Vorrichtung zum Wärmeaustauch in Solarkraftanlagen mit einem Bauteil in Plattenform aus einem Geflecht von Metalldrähten.

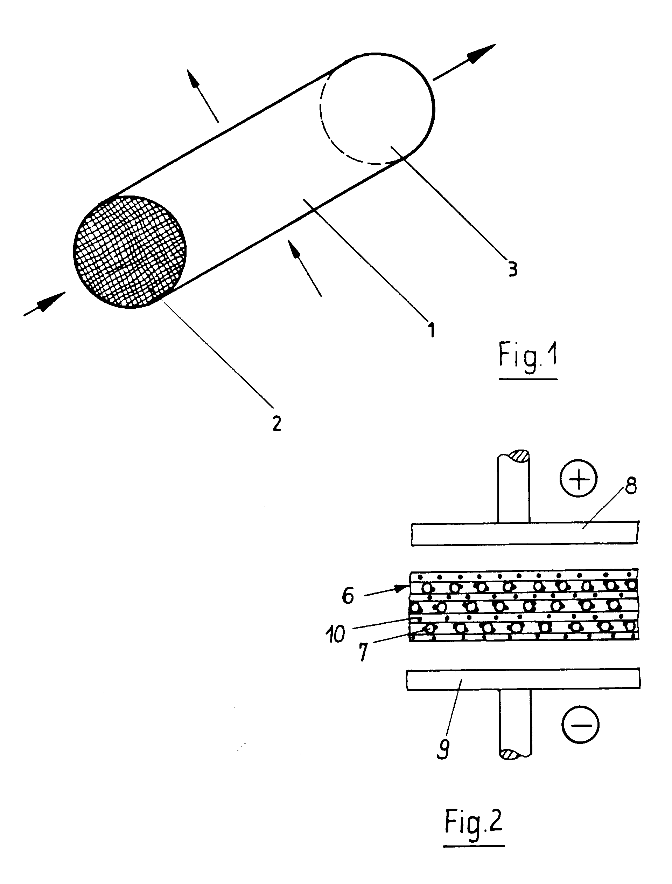

Das in den Fig. 1 und 2 dargestllte Bauteil 1 ist besonders für eine Verwendung bei Solarkraftanlagen geeignet.

Gemäß Ausführungsbeispiel nach Fig. 1 besteht es vollständig aus Metallspänen, die in einer entsprechenden Form formgepreßt und anschließend gesintert worden sind. Dabei entsteht ein Bauteil mit einer hohen Porosität.

Als Material eignen sich alle Metallarten mit hoher Wärmeleitfähigkeit, insbesondere Kupfer.

Ein derartiges zylinderförmiges Bauteil, das selbstverständlich auch noch völlig andere Formgestaltungen besitzen kann, wird in einer Solarkraftanlage (nicht dargestellt) einer intensiver Sonnenbestrahlung ausgesetzt und heizt sich damit auf Temperaturen von über 800 Grad C auf. Läßt man dabei z.B. in Pfeilrichtung das Bauteil 1 von einer Stirnseite 2 zu anderen Stirnseite 3 mit Luft durchströmen, so heizt sich diese Luft entsprechend auf Temperaturen von über 800 Grad C auf, womit sie anschließend zur Energiegewinnung verwendet werden kann. Ebenso ist selbstverständlich jedoch auch eine Querdurchströmung möglich. In gleicher Weise können statt Luft auch andere Medien zum Wärmabtransport aus dem Bauteil 1 verwendet werden können.

In der Fig. 2 ist ein Ausführungsbeispiel für eine Wärmeübertragungs- bzw. Wärmetauschereinrichtung dargestellt, wobei das Grundbauteil aus einzelnen Platten 6 besteht, die jeweils durch ein Geflecht aus mehreren Lagen von Einzeldrähten 7 gebildet werden, die z.B. durch Längs- und Querdrähte zu einem Geflecht bzw. Gewirk miteinander verbunden sind. Je nach Anwendungsfall legt man mehrere derartige Platten 6 mit ihrem Geflecht aus Metalldrähten 7 übereinander und bringt sie zwischen Elektrodenplatten 8 und 9 einer Widerstandsschweißeinrichtung.

Nähert man die beiden Elektrodenplatten 8 und 9 einander an, wobei eine der beiden Platten den Plus-Pol und die andere den Minus-Pol bildet, und übt auf die dazwischenliegenden Platten 6 einen Druck aus, wobei gleichzeitig eine Widerstandsverschweißung durch einen entsprechenden Stromstoß erfolgt, so verbinden sich die einzelnen Drähte 7 punktuell sowohl innerhalb einer Lage 6 als auch die jeweils äußeren Drähte einer Lage 7 mit den benachbart dazu liegenden Drähten der nächsten Platte 6. Auf diese Weise entsteht eine feste Einheit, wobei jedoch für den Durchgang eines Fluid genügend große Poren bzw. Öffnungen vorhanden sind.

Nach der Widerstandsverschweißung kann das damit gebildete Bauteil im Bedarfsfalle auch in eine beliebige Form gebogen werden.

Nach der Widerstandsverschweißung wird das Bauteil mit Spänen, kurzen Metalldrähten oder einem Metallpulver 10 aus einem wärmeleitfähigen Material versehen, wozu die genannten Teile auf beliebige Weise in das Innere des Bauteiles verteilt werden. Dies kann z.B. durch Einrütteln, durch Einbringen über eine klebrige Flüssigkeit, durch elektrische und/oder magnetische Wirkung erfolgen. Nach dem Einbringen der Späne, Metalldrähte oder Metallpulver folgt in üblicher Weise ein Sintervorgang, womit die genannten Teile mit dem Bauteil, d.h. mit den Drähten 7 und den daraus gebildeten Platten 6, verbunden werden.

Die Durchmesser von Metalldrähten oder Metallpulver bzw. Breiten von Metallspänen und deren Längen richten sich nach dem jeweiligen Anwendungsfall und können zwischen 0,1 und 5 mm bzw. zwischen 1 und 10 mm betragen. Im allgemeinen werden die Längen deutlich größer sein als die Durchmesser bzw. Breiten. Im Bedarfsfalle können jedoch selbstverständlich hier auch noch Abweichungen sowohl nach unten als auch nach oben vorgenommen werden.

**Patentansprüche**

1. Vorrichtung zur Wärmeübertragung bzw. zum Wärmeabtransport von einem Bauteil auf ein Fluid, insbesondere Luft, wobei das Bauteil (1,4) wenigstens teilweise mit Spänen, Metalldrähten oder grobem Metallpulver (5) aus wärmeleitfähigem Material versehen ist, die auf das Bauteil aufgesintert oder mit diesem versintert sind,
**dadurch gekennzeichnet**, daß
das Bauteil (1) aus mehreren Platten (6) aus einem Geflecht oder Gewirk von Metalldrähten (7) gebildet ist, wobei in das Geflecht oder Gewirk die Späne, die Metalldrahtstücke oder das grobe Metallpulver (5) eingesintert sind und wobei die Dicke bzw. der Durchmesser der gesinterten Teilchen zwischen 0,1 bis 2 mm liegt.

2. Vorrichtung nach Anspruch 1,
**dadurch gekennzeichnet,** daß
die Platten (6) durch eine Widerstandsverschweißung teilweise miteinander verbunden sind.

3. Vorrichtung nach Anspruch 1 oder 2,
**dadurch gekennzeichnet**, daß
in der oder den Platten (6) unterschiedlich starke Drähte (7) angeordnet sind.

4. Vorrichtung nach Anspruch 1,
**dadurch gekennzeichnet**, daß
die Längen der gesinterten Teilchen zwischen 1 und 10 mm liegen.

5. Vorrichtung nach einem der Ansprüche 1 - 4,
**dadurch gekennzeichnet**, daß
als Sinterteilchen Kupfer vorgesehen ist.

6. Verwendung einer Vorrichtung nach einem der Ansprüche 1 - 5,
**dadurch gekennzeichnet,** daß
sie als Wärmetauscher in Solarkraftanlagen eingesetzt ist, wobei durch das erwärmte Bauteil (4) ein gasförmiges Medium, wie z.B Luft, strömt.

**Claims**

1. Heat transfer or heat dissipation device from a component to a fluid, especially air, wherein the component (1, 4) is at least partially provided with chips, metal wires or coarse metal powder (5) of heat-conductive material sintered on to the component or sintered together therewith, characterised in that the component (1) is formed of a plurality of plates (6) consisting of a mesh or knitted fabric of metal wires (7), the chips, the metal wire pieces or the coarse metal powder (5) being sintered into the mesh or knitted fabric and the thickness or diameter of the sintered particles being between 0.1 and 2 mm.

2. Device according to claim 1, characterised in that the plates (6) are partially connected to one another by resistance welding.

3. Device according to claim 1 or claim 2, characterised in that wires (7) of different thicknesses are arranged in the plate or plates (6).

4. Device according to claim 1, characterised in that the lengths of the sintered particles are between 1 and 10 mm.

5. Device according to one of claims 1 - 4, characterised in that copper is provided for the sintered particles.

6. Use of a device according to one of claims 1 - 5, characterised in that it is used as a heat exchanger in solar power plants, a gaseous medium, e.g. air, flowing through the heated component (4).

**Revendications**

1. Dispositif pour transmettre ou évacuer de la chaleur d'un élément constructif vers un fluide, notamment de l'air, où au moins une partie de l'élément constructif (1, 4) est pourvue de copeaux, de fils métalliques ou de poudre métallique grossière (5) en matière thermiquement conductrice, lesquels sont frittés sur ou avec ledit élément, **caractérisé** en ce que ledit élément (1) est formé de plusieurs plaques (6) faites d'un entrelacs ou de mailles de fils métalliques (7), où les copeaux, les morceaux de fils métalliques ou la poudre métallique grossière (5) sont frittés dans l'entrelacs ou les mailles et où l'épaisseur ou le diamètre des particules frittées est comprise ou compris entre 0,1 et 2 mm.

2. Dispositif selon la revendication 1, **caractérisé** en ce que les plaques (6) sont fixées partiellement les unes aux autres au moyen d'un soudage par résistance.

3. Dispositif selon les revendications 1 ou 2, **caractérisé** en ce que des fils (7) de différentes épaisseurs sont contenus dans la ou les plaques (6).

4. Dispositif selon la revendication 1, **caractérisé** en ce que les longueurs des particules frittées sont comprises entre 1 et 10 mm.

5. Dispositif selon l'une des revendications 1 à 4, **caractérisé** en ce que les particules frittées sont en cuivre.

6. Utilisation d'un dispositif selon l'une des revendications 1 à 5, **caractérisée** en ce que le dispositif est mis en oeuvre comme échangeur de chaleur dans des centrales solaires de production d'énergie, où un fluide gazeux, par exemple de l'air, s'écoule à travers ledit élément constructif (4) chauffé.

Fig.1

Fig.2

6